(19)

**Europäisches Patentamt**
**European Patent Office**
**Office européen des brevets**

(11) **EP 4 661 287 A1**

(12) ## EUROPÄISCHE PATENTANMELDUNG

(43) Veröffentlichungstag:
**10.12.2025   Patentblatt 2025/50**

(21) Anmeldenummer: **24180829.4**

(22) Anmeldetag: **07.06.2024**

(51) Internationale Patentklassifikation (IPC):
**H02S 50/00** $^{(2014.01)}$

(52) Gemeinsame Patentklassifikation (CPC):
**H02S 50/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Fraunhofer-Gesellschaft zur Förderung
der angewandten Forschung e.V.
80686 München (DE)**

(72) Erfinder:
• **Dr. MAURER, Christoph**
  **79110 Freiburg (DE)**
• **Dr. WACKER, Simon**
  **79110 Freiburg (DE)**
• **Dr. WILSON, Helen Rose**
  **79110 Freiburg (DE)**
• **Dr. EISENLOHR, Johannes**
  **79110 Freiburg (DE)**

(74) Vertreter: **LBP Lemcke, Brommer & Partner
Patentanwälte mbB
Siegfried-Kühn-Straße 4
76135 Karlsruhe (DE)**

(54) **VERFAHREN ZUM ERSTELLEN EINES VERSCHALTUNGSPLANS FÜR DIE ELEKTRISCHE VERSCHALTUNG EINER MEHRZAHL SOLARELEMENTE**

(57)    Die Erfindung betrifft ein Verfahren zum Erstellen eines Verschaltungsplans für die elektrische Verschaltung einer Mehrzahl auf einer Belegungsfläche angeordneter Solarelemente mit folgenden Verfahrensschritte:

A Bereitstellen der Belegungsfläche als Flächenmodell, insbesondere dass die Belegungsfläche eine Gebäudehülle (1) ist, die als Flächenmodell bereitgestellt wird; Bereitstellen eines Belegungsplans mit der Position jedes der Mehrzahl von Solarelementen auf der Belegungsfläche; Bereitstellen von Einstrahlungsdaten, wobei die Einstrahlungsdaten für mehrere Positionen $P_i$ auf der Belegungsfläche jeweils für zumindest drei Zeitpunkte t einen Einstrahlungswert $G(i, t)$ der zu dem Zeitpunkt t an der Position $P_i$ einfallenden Strahlung, insbesondere der einfallenden Sonnenstrahlung, aufweist;

B Berechnen eines Ähnlichkeitsmaßes $AM(i, j)$, für alle Paare zweier unterschiedlicher Solarelemente i und j der Mehrzahl von Solarelementen, wobei das Ähnlichkeitsmaß $AM(i, j)$ abhängig von einem Zeitähnlichkeitsmaß $Z(i, j)$ und/oder einem Stromstärkenähnlichkeitsmaß $S(i, j)$ und/oder einem Spannungsähnlichkeitsmaß $SM(i, j)$ berechnet wird.

Fig. 1

EP 4 661 287 A1

## Beschreibung

Die Erfindung betrifft ein Verfahren zum Erstellen eines Verschaltungsplans für die elektrische Verschaltung einer Mehrzahl Solarelemente, welche auf einer Belegungsfläche angeordnet sind gemäß Anspruch 1.

Die Verwendung von photovoltaischen Solarzellen zur Umwandlung elektromagnetischer Strahlung in elektrische Energie erfolgt üblicherweise mit einem Solarmodul, welches eine Mehrzahl von Solarzellen aufweist. Diese Solarzellen sind zur Bildung eines Solarmoduls typischerweise in Form von Solarzellenstrings verschaltet. Ein solcher Solarzellenstring umfasst mehrere Solarzellen, die elektrisch leitend miteinander verbunden sind. Typischerweise sind die Solarzellen in einem Solarzellenstring in Reihe geschaltet, da eine einzelne Solarzelle eine eher geringere Spannung, jedoch einen hohen Strom erzeugt.

Sowohl auf der Ebene der Solarzellen erfolgt typischerweise eine Verschaltung zu Solarmodulen als auch auf der Ebene der Solarmodule zu größeren Einheiten sowie eine Verschaltung von Gruppen von Solarmodulen zu größeren Einheiten, die alle durch die vorliegende Erfindung adressiert werden. Darüber hinaus liegen auch weitere solaraktive Elemente im Rahmen der Erfindung, wie beispielsweise Solarthermieelemente, sodass im Weiteren übergreifend von Solarelementen gesprochen wird.

Mehr und mehr werden Solarelemente in Gebäude integriert. Bei der Anordnung von Solarelementen auf der Gebäudehülle ergeben sich für die Verschaltung der Elemente untereinander Herausforderungen in Bezug auf Effizienz und Wirtschaftlichkeit.

Insbesondere verschattete oder teilverschattete Gebäudehüllen stellen besondere Herausforderungen dar.

Aus dem Stand der Technik ist es bekannt, für jedes einzelne Solarelement individuelle Steuer- und Verarbeitungsvorrichtungen vorzusehen, wie beispielsweise für jedes Solarmodul einen Modulwechselrichter. Hierdurch ergibt sich ein hoher Solarertrag. Nachteilig sind jedoch die überdurchschnittlich hohen Investitionskosten. Alternativ ist es bekannt, Dioden einzusetzen. Dies kann ebenfalls zu einem hohen Solarertrag führen, jedoch bei gleichzeitig hohen Kosten für Planung, Installation und Material.

Eine weitere Alternative ist es, auf der Basis von Erfahrung und anhand von Trial-and-Error-Verfahren Solarelemente ohne zusätzliche Dioden oder Stromwandler zu größeren Einheiten zu verschalten, um so den Solarertrag zu optimieren. Für diese Alternative ist jedoch eine entsprechende Erfahrung erforderlich und sie birgt das Risiko, dass die Belegung von Gebäudehüllen mit solaren Elementen geplant wird, die sich aufgrund der Verschaltung nicht umsetzen lassen oder einen geringeren Ertrag als möglich liefern.

Der Erfindung liegt daher die Aufgabe zugrunde, die Planung der Verschaltung von Solarelementen auf einer Belegfläche zu ermöglichen, die individuelle Parameter wie Gegebenheiten der Belegfläche, solare Einstrahlung und vorgebbare Verschaltungsparameter berücksichtigt. Mittels der vorgebbaren Verschaltungsparameter lassen sich beispielsweise individuelle Gegebenheiten, technische Anforderungen oder individuelle Ziele, wie zum Beispiel eine angestrebte Ästhetik, berücksichtigen.

Die Erfindung ist jedoch nicht beschränkt auf die Verschaltung von Solarmodulen auf Gebäudehüllen. Vielmehr lässt sich die Erfindung beispielsweise auch auf Solarzellenebene, das heißt die Verschaltung innerhalb einer Solarzelle, oder auf Modulebene, das heißt die Verschaltung von Solarzellen zu einem Modul, oder auf Solarthermieelemente anwenden.

Gelöst ist diese Aufgabe durch ein Verfahren zum Erstellen eines Verschaltungsplans für die elektrische Verschaltung einer Mehrzahl auf einer Belegungsfläche angeordneter Solarelemente gemäß Anspruch 1. Vorteilhafte Ausgestaltungen des erfindungsgemäßen Verfahrens finden sich in den abhängigen Ansprüchen. Hiermit wird der Wortlaut sämtlicher Ansprüche explizit per Referenz in die Beschreibung einbezogen.

Das erfindungsgemäße Verfahren zum Erstellen eines Verschaltungsplans für die elektrische Verschaltung einer Mehrzahl auf einer Belegungsfläche angeordneter Solarelemente weist die folgenden Verfahrensschritte auf:

In einem Verfahrensschritt A erfolgen ein Bereitstellen der Belegungsfläche als Flächenmodell, insbesondere dass die Belegungsfläche eine Gebäudehülle ist, die als Flächenmodell bereitgestellt wird; Bereitstellen eines Belegungsplans mit der Position jedes der Mehrzahl von Solarelementen auf der Belegungsfläche; Bereitstellen von Einstrahlungsdaten, wobei die Einstrahlungsdaten für mehrere Positionen $P_i$ auf der Belegungsfläche jeweils für zumindest drei Zeitpunkte t einen Einstrahlungswert $G(i, t)$ der zu dem Zeitpunkt t an der Position $P_i$ einfallenden Strahlung, insbesondere der einfallenden Sonnenstrahlung, aufweist;

Vorzugsweise wird der Verschaltungsplan wie in der parallelen europäischen Patentanmeldung EP24180782.5 der Anmelderin vom 7. Juni 2024 mit dem Titel "Verfahren zum Erstellen eines Belegungsplans für die Anordnung einer Mehrzahl von Solarelementen auf einer Belegungsfläche" beschrieben erstellt. Ein solcher Belegungsplan berücksichtigt die Gegebenheiten der Gebäudehülle, wie Hindernisse auf der Gebäudehülle, Spezialflächen wie Balkonbrüstungen, aber auch erforderliche Mindestabstände, die Solarelemente von Hindernissen oder den Rändern der Belegfläche einhalten müssen.

In einem Verfahrensschritt B wird ein Ähnlichkeitsmaßes $AM(i, j)$ berechnet, für alle Paare zweier unterschiedlicher Solarelemente i und j einer Untergruppe der Mehrzahl von Solarelementen, wobei das Ähnlichkeitsmaß $AM(i, j)$

abhängig von einem Zeitähnlichkeitsmaß Z(i, j) und/oder einem Stromstärkenähnlichkeitsmaß S(i, j) und/oder einem Spannungsähnlichkeitsmaß SM(i, j) für alle Paare zweier unterschiedlicher Solarelemente i und j einer Untergruppe der Mehrzahl von Solarelementen berechnet wird.

Dabei liegt es im Rahmen der Erfindung, dass die Untergruppe der Mehrzahl von Solarelementen identisch mit der Gesamtzahl der Solarelemente ist. Das bedeutet, dass das Ähnlichkeitsmaß AM(i, j) für alle Kombinationen zweier unterschiedlicher Solarelemente i und j der Mehrzahl der Solarelemente bestimmt wird. Es liegt jedoch ebenfalls im Rahmen der Erfindung, das Ähnlichkeitsmaß nur für die Paare zweier unterschiedlicher Solarelemente i und j einer Untergruppe zu berechnen, die kleiner als die Gesamtzahl der Solarelemente ist. In die Untergruppe fallen vorzugsweise alle Solarelemente, die aufgrund ihrer räumlichen Nähe miteinander verschaltet werden können.

Das Zeitähnlichkeitsmaß Z(i, j) wird für alle Paare zweier unterschiedlicher Solarelemente i und j einer Untergruppe der Mehrzahl von Solarelementen als Maß einer zeitlichen Verschiebung zwischen den Einstrahlungswerten G(i, t) des Solarelements i und den Einstrahlungswerten G(j, t) des Solarelements j berechnet. Das Stromstärkenähnlichkeitsmaß S(i, j) wird für alle Paare zweier unterschiedlicher Solarelemente i und j einer Untergruppe der Mehrzahl von Solarelementen als Maß einer zeitbasierten Ähnlichkeit der elektrischen Stromstärken der Solarelemente i und j der Mehrzahl von Solarelementen vorzugsweise in deren individuellem Maximum Power Point berechnet. Das Spannungsähnlichkeitsmaß SM(i, j) wird für alle Paare zweier unterschiedlicher Solarelemente i und j einer Untergruppe der Mehrzahl von Solarelementen als Maß einer zeitbasierten Ähnlichkeit der elektrischen Spannung der Solarelemente i und j der Mehrzahl von Solarelementen vorzugsweise in deren individuellem Maximum Power Point berechnet.

In einem Verfahrensschritt C erfolgt das Erstellen eines elektrischen Verschaltungsplans in Abhängigkeit des Ähnlichkeitsmaßes AM(i, j).

Die Erfindung ist in der Erkenntnis der Anmelderin begründet, dass durch die Verwendung des Ähnlichkeitsmaßes AM(i, j) auf der Basis des Zeitähnlichkeitsmaßes und/oder des Stromstärkenähnlichkeitsmaßes und/oder des Spannungsähnlichkeitsmaßes SM(i, j) für die Erstellung des Verschaltungsplans ein zuverlässiges Kriterium für die Geeignetheit zweier Solarelemente für die Verschaltung untereinander vorliegt.

Das erfindungsgemäße Verfahren ermöglicht somit ein besonders verlässliches und effizientes Verfahren zum Erstellen eines elektrischen Verschaltungsplans, mit dem der Solarertrag optimiert wird und gleichzeitig möglichst wenig Zusatzkosten entstehen.

Das Ähnlichkeitsmaßes AM(i, j) stellt somit ein Maß dar, wie gut zwei Solarelemente für eine Verschaltung miteinander geeignet sind. Das Ähnlichkeitsmaßes AM(i, j) basiert auf dem Zeitähnlichkeitsmaß und/oder dem Stromstärkenähnlichkeitsmaß und/oder dem Spannungsähnlichkeitsmaß SM(i, j), die jeweils allein oder in Kombination als Maß für die Ähnlichkeit zweier Solarelemente geeignet sind. Vorzugsweise sind die Solarelemente bei einer kleinen bis mittleren Abweichung üblicherweise gut geeignet, miteinander verschaltet zu werden. Solarelemente mit einer größeren Abweichung sind hingegen weniger gut für eine Verschaltung geeignet.

Das Zeitähnlichkeitsmaß ist im Rahmen dieser Beschreibung so definiert, dass ein hoher Wert einer hohen zeitlichen Ähnlichkeit entspricht und damit einer hohen Eignung für eine Verschaltung.

Das Stromstärkenähnlichkeitsmaß ist im Rahmen dieser Beschreibung so definiert, dass ein hoher Wert einer hohen zeitlichen Ähnlichkeit entspricht und damit einer hohen Eignung für eine Verschaltung.

Das Spannungsähnlichkeitsmaß ist im Rahmen dieser Beschreibung so definiert, dass ein hoher Wert einer hohen zeitlichen Ähnlichkeit entspricht und damit einer hohen Eignung für eine Verschaltung.

Die Bestimmung des Zeitähnlichkeitsmaßes Z(i, j) basiert auf Einstrahlungsdaten für jedes Solarelement aus einer Untergruppe der Mehrzahl der Solarelemente. Die Einstrahlungsdaten umfassen wie bereits beschrieben für mehrere Positionen $P_i$ auf der Belegungsfläche jeweils für zumindest drei Zeitpunkte t einen Einstrahlungswert G(i, t), der der zu dem Zeitpunkt t an der Position $P_i$ einfallenden Strahlung entspricht. Vorteilhafterweise handelt es sich hier um die einfallende Sonnenstrahlung. Die Einstrahlungsdaten basieren vorzugsweise auf Messungen der (Sonnen-)Einstrahlung an der Belegungsfläche. Bevorzugt werden die Messdaten ergänzt um Berechnungen zur solaren Einstrahlung auf die Belegungsfläche.

In einer bevorzugten Ausführungsform der Erfindung wird das Zeitähnlichkeitsmaß Z(i, j) der Solarelemente i und j mittels einer Faltung bestimmt. Bevorzugt wird das Zeitähnlichkeitsmaß Z(i, j) der Solarelemente i und j mittels einer Kreuzkorrelation der Einstrahlungswerte G(i, t) und G(i, j, t) bestimmt, insbesondere bevorzugt mittels der Kreuzkorrelation K(i, j, t)

$$K(i, j, t) = \int_A^B G(i, \tau) G(j, \tau + t) d\tau$$

mit den zeitlichen I<orrelationsgrenzen A und B, wobei bevorzugt A und B sich um zumindest vier Stunden, insbesondere bevorzugt um mindestens sechs Stunden unterscheiden.

Die zeitliche Verschiebung der Einstrahlungen der Solarelemente i und j aus der Mehrzahl von Solarelementen, die verglichen werden, kann nicht größer sein als ein Tag, das heißt 24 Stunden. Die Kreuzkorrelation muss deshalb nicht für alle t von -∞ bis +∞ berechnet werden, sodass Rechenaufwand gespart werden kann. Vorteilhafterweise kann weiterer Rechenaufwand dadurch eingespart werden, dass die Korrelationsgrenzen $A$ und $B$ dahingehend angepasst werden, dass schon eine Verschaltung ab einer zeitlichen Verschiebung von sechs Stunden üblicherweise nicht mehr sinnvoll ist. Vorteilhafterweise kann weiterer Rechenaufwand dadurch eingespart werden, dass an Stelle eines Integrals eine Summe über mindestens drei diskrete Werte von $\tau$ berechnet wird.

In einer vorteilhaften Ausgestaltung der Erfindung wird das Zeitähnlichkeitsmaß Z(i, j) basierend auf dem Maximum der Faltung, insbesondere der Kreuzkorrelation der Einstrahlungswerte G(i, t) und G(j, t) bestimmt. Die zeitliche Verschiebung t des Maximums der Kreuzkorrelation K(i, j, t) entspricht der zeitlichen Verschiebung zwischen den Einstrahlungswerten G(i, t) und G(j, t). Je kleiner die zeitliche Verschiebung, desto empfehlenswerter ist eine Verschaltung der Solarelemente i und j.

Bevorzugt wird das Maximum der Kreuzkorrelation $max[K(i,j,t)]$ bestimmt und der Kehrwert des Betrags der

$$\frac{1}{|t|} \left| \frac{1}{\left\| \max_{t\in[-12h,12h]}[K(i,j,t)] \right.} \right.$$

Abszisse dieses Maximums als Zeitähnlichkeitsmaß Z(i, j) verwendet, wenn die zeitliche Verschiebung des Maximums ungleich 0 ist und es genau ein Maximum gibt. Für den Fall, dass die zeitliche Verschiebung des Maximums gleich 0 ist, wird das Zeitähnlichkeitsmaß Z(i, j) auf einen Wert gesetzt, der signalisiert, dass die Verschaltung der Solarelemente i und j extrem vorteilhaft ist.

Bevorzugt wird für den Fall, dass es mehrere Maxima ungleich 0 gibt, der größte Kehrwert des Betrags der Abszisse als Zeitähnlichkeitsmaß Z(i, j) verwendet:

$$Z(i,j) = max(x), \forall x \in \left\{ \frac{1}{|t|} \left| \frac{1}{\left\| \max_{t\in[-12h,12h]}[K(i,j,t)] \right.} \right. \right\}$$

Da das Maximum der Kreuzkorrelation K(i, j, t) bei der kleinsten zeitlichen Verschiebung zwischen den Einstrahlungswerten G(i, t) und G(j, t) liegt, ergibt sich so der Vorteil, dass das Paar Solarelemente i und j mit der kleinsten zeitlichen Verschiebung ausgewählt wird. Je kleiner die zeitliche Verschiebung, desto empfehlenswerter ist eine Verschaltung der Solarelemente i und j.

In einer bevorzugten Ausführungsform der Erfindung wird in Verfahrensschritt C für den Verschaltungsplan die Verschaltung zweier Solarelemente i und j derart bewertet, dass ein möglichst großes Zeitähnlichkeitsmaß Z(i, j) angestrebt wird.

Alternativ oder zusätzlich wird in Verfahrensschritt B das Stromstärkenähnlichkeitsmaß S(i, j) für alle Paare zweier unterschiedlicher Solarelemente i und j einer Untergruppe der Mehrzahl von Solarelementen berechnet. Das Stromstärkenähnlichkeitsmaß S(i, j) wird als Maß einer zeitbasierten Ähnlichkeit der elektrischen Stromstärken der Solarelemente i und j vorzugsweise in deren individuellem Maximum Power Point berechnet. Das Ähnlichkeitsmaß AM(i, j) wird abhängig von dem Zeitähnlichkeitsmaß Z(i, j) und dem Stromstärkenähnlichkeitsmaß S(i, j) berechnet.

Hierdurch ergibt sich der Vorteil, dass ein weiterer Faktor für die Beurteilung der Ähnlichkeit der Solarelemente zu noch höheren Erträgen der verschalteten Strings führt. Denn nicht nur Solarelemente mit zeitlich ähnlicher Einstrahlung führen zu höheren Erträgen eines Strings, sondern auch Solarelemente mit ähnlicher Stromstärke im Maximum Power Point. Dies liegt an der Form der Strom-Spannungs-Kennlinie, die idealerweise rechteckig wäre. Unterschiedliche Stromstärken der Solarelemente führen zu einer weniger rechteckigen Strom-Spannungs-Kennlinie. Dies gilt für die Verschaltung von Solarelementen zu Strings. Wenn es um die Parallelschaltung von Solarelementen oder Strings geht, dann ist die Ähnlichkeit der Spannung im Maximum Power Point die passende Ergänzung zur zeitlichen Ähnlichkeit. Unterschiedliche Spannungen führen bei Parallelschaltung zu weniger rechteckigen Strom-Spannungs-Kennlinien und dadurch zu weniger Ertrag. Das Stromähnlichkeitsmaß bei einer Reihenverschaltung und das Spannungsähnlichkeitsmaß bei einer Parallelverschaltung ermöglicht es, auf zusätzliche Bauelemente möglichst zu verzichten und eine hohe Effizienz zu erreichen.

Vorzugsweise wird das Stromstärkenähnlichkeitsmaß S(i, j) abhängig vom Betrag der Differenz der Stromstärken $|I(G(i, \tau)) - I(G(j, \tau))|$ der Solarelemente i und j in deren individuellem Maximum Power Point für eine Mehrzahl von Zeitpunkten t bestimmt. Bevorzugt wird das Stromstärkenähnlichkeitsmaß S(i, j) wie folgt bestimmt:

$$S(i,j) = \frac{1}{\int_A^B \left| I\big(G(i,\tau)\big) - I\big(G(j,\tau)\big) \right| d\tau}$$

mit den zeitlichen Korrelationsgrenzen $A$ und $B$. Die zeitlichen Korrelationsgrenzen $A$ und $B$ bestimmen die erforderliche Rechenzeit für das Verfahren. Die rechnerisch aufwändigste Variante ist mit $A$ als Beginn eines Jahres und $B$ als Ende eines Jahres. Eine rechnerisch einfache Variante ist mit A als Sonnenaufgang eines Tags der Tag-und-Nacht-Gleiche und $B$ als Sonnenuntergang dieses Tags der Tag-und-Nacht-Gleiche. Um Veränderungen über das Jahr zu berücksichtigen, werden vorzugsweise die vier Tage von Wintersonnwende, Frühlingsbeginn, Sommersonnwende und Herbstbeginn herangezogen und zu einem Integral über diese vier Tage verbunden.

Bevorzugt unterscheiden $A$ und $B$ sich um mindestens 4h, insbesondere bevorzugt um mindestens 6h.

Zur Optimierung der Rechenzeit wird vorzugsweise statt eines Integrals eine Summe über diskrete Werte von $\tau$ verwendet, bevorzugt von mindestens drei diskreten Werten von $\tau$, insbesondere bevorzugt Zeitschritte von 15 bis 60 Minuten.

Im Rahmen dieser Beschreibung wird neben dem Ähnlichkeitsmaß in seinen verschiedenen Ausprägungen auch vom Unähnlichkeitsmaß gesprochen. Das Unähnlichkeitsmaß M hängt mit dem Ähnlichkeitsmaß S über den

$$M = \frac{1}{S}$$

Kehrwert 1 zusammen: .

Alternativ oder zusätzlich wird in Verfahrensschritt B das Spannungsähnlichkeitsmaß SM(i, j) für alle Paare zweier unterschiedlicher Solarelemente i und j einer Untergruppe der Mehrzahl von Solarelementen vorzugsweise in deren Maximum Power Point berechnet. Das Spannungsähnlichkeitsmaß SM(i, j) wird als Maß einer zeitbasierten Ähnlichkeit wie folgt berechnet:

$$SM(i,j) = \frac{1}{\int_A^B \left| U\big(G(i,\tau)\big) - U\big(G(j,\tau)\big) \right| d\tau}$$

Hierdurch ergibt sich der Vorteil, dass ein weiterer Faktor für die Beurteilung der Ähnlichkeit der Solarelemente zu noch höheren Erträgen der verschalteten Strings führt. Denn nicht nur Solarelemente mit zeitlich ähnlicher Einstrahlung oder mit ähnlicher Stromstärke im Maximum Power Point führen zu höheren Erträgen eines Strings, sondern auch Solarelemente mit einem ähnlichen Spannungsähnlichkeitsmaß SM(i, j). Unterschiedliche Spannungen führen bei Parallelschaltung zu weniger rechteckigen Strom-Spannungs-Kennlinien und dadurch zu weniger Ertrag. Das Spannungsähnlichkeitsmaß ermöglicht es bei einer Parallelschaltung von Solarelementen vorteilhafterweise, auf zusätzliche Bauelemente möglichst zu verzichten und eine hohe Effizienz zu erreichen.

In einer bevorzugten Ausführungsform des erfindungsgemäßen Verfahrens wird für jedes Solarelement i der Mehrzahl von Solarelementen eine Einstrahlungssumme Gs(i) bestimmt, welche ein Maß für mittels dieses Solarelementes erzeugte elektrische Energie darstellt. Bevorzugt wird die Einstrahlungssumme Gs(i) wie folgt bestimmt

$$G_s(i) = \int_A^B G(i,\tau)\, d\tau$$

mit den zeitlichen Korrelationsgrenzen $A$ und $B$, wobei A < B. Vorzugsweise umschließen die zeitlichen Korrelationsgrenzen $A$ und $B$ den Zeitraum mehrerer Monate, insbesondere bevorzugt den Zeitraum eines Jahres. Hierdurch ergibt sich der Vorteil, dass Schwankungen im Jahresverlauf Berücksichtigung finden.

Wie bereits erwähnt, kann es aufgrund individueller Gegebenheiten oder technischer Anforderungen notwendig und/oder sinnvoll sein, vorgebbare Verschaltungsparameter zu definieren. Diese vorgebbaren Verschaltungsparameter bilden eine Randbedingungsmenge für die Verschaltung der Solarelemente. In einer bevorzugten Ausführungsform des erfindungsgemäßen Verfahrens wird in Verfahrensschritt C der Verschaltungsplan mit einer Mehrzahl von Strings von Solarelementen ausgebildet. Jeder String weist eine Mehrzahl in Reihe geschalteter Solarelemente auf und beginnt mit einem Startsolarelement. Unter dem Begriff "\Startsolarelement" wird im Rahmen dieser Beschreibung das erste Solarelement eines Strings von Solarelementen verstanden oder auch ein Solarelement, das am Ende eines weiter zu planenden Strings liegt, welches als Startsolarelement für einen nächsten Verfahrensschritt gilt.

Der Verschaltungsplan wird vorzugsweise in Abhängigkeit einer Randbedingungsmenge ausgebildet, wobei die Randbedingungsmenge eine Stringrandbedingungsmenge aufweist, wobei die Stringrandbedingungsmenge zumindest eine der Randbedingungen RS1 bis RS8

| | |
|---|---|
| RS1 | Maximale Anzahl der Solarelemente in einem String; |
| RS2 | Minimale Anzahl der Solarelemente in einem String; |
| RS3 | Maximale Spannung des Strings; |
| RS4 | Minimale Spannung des Strings; |
| RS5 | Maximale Stromstärke des Strings; |
| RS6 | Minimale Stromstärke des Strings; |
| RS7 | Maximale Leistung des Strings; |
| RS8 | Minimale Leistung des Strings; |

aufweist.

Die verschiedenen Stringrandbedingungen und welche Stringrandbedingungen erforderlich bzw. empfehlenswert sind, sind abhängig von den tatsächlichen Gegebenheiten, den zu verplanenden Solarelementen sowie den individuellen Zielen.

Die Werte für die aufgelisteten Stringrandbedingungen lassen sich auf folgende Arten berechnen:

1) Man betrachtet die Solarelemente, bevorzugt Solarmodule in ihrem individuellen Maximum-Power-Point unter Standard Test Conditions und rechnet diese zusammen. Bei Reihenverschaltungen müssen die Spannungen addiert werden, während bei Serienverschaltungen die Stromstärken addiert werden müssen.

2) Man betrachtet die Zeitreihen für die Spannung, Stromstärke und Leistung der Solarelemente, bevorzugt Solarmodule und rechnet diese zusammen, zum Beispiel als Jahressummen oder Mittelwerte.

3) Man betrachtet die Strom-Spannungs-Kennlinien und rechnet diese für jeden Zeitschritt zusammen. Man bestimmt den Maximum-Power-Point des Strings für jeden Zeitschritt und rechnet diese zusammen, zum Beispiel als Jahressummen oder Mittelwerte.

Der Vorteil der ersten Variante ist, dass weniger Rechenzeit benötigt wird.

Der Vorteil der zweiten Variante ist, dass zwar etwas mehr Rechenzeit benötigt wird, aber die Strings noch besser zu weiteren Bauelementen, wie bevorzugt Wechselrichtern passen, was zu einem höheren Gesamtwirkungsgrad führt.

Der Vorteil der dritten Variante ist, dass zwar die meiste Rechenzeit benötigt wird, aber die Strings am besten zu weiteren Bauelementen, wie bevorzugt Wechselrichtern passen, was zu einem höheren Gesamtwirkungsgrad führt.

Statt der Definition einer festen Anzahl von Solarelementen pro String (v+1), kann die Stringlänge wie aufgeführt durch die erwartete Leistung begrenzt werden. In einer solchen bevorzugten Ausführungsform entfällt die Bedingung, dass die Anzahl der Elemente ein Vielfaches von (v+1) sein muss.

Dafür wird ein Maß für die Leistung des Strings benötigt $M_{L,string}$. Dies kann z. B. als Summe der Kreuzkorrelation aller Verbindungen des Strings berechnet werden $M_{L,string} = \Sigma_{(i,j)} K(i,j,0)$. Alternativ können als Leistungsmaß z. B.

$$M_{L,string,2} = \int_{1.1.}^{31.12.} \sum_i P(i, G(i,\tau))\, d\tau$$

oder

$$M_{L,string,3} = \int_{1.1.}^{31.12.} \sum_i G(i,\tau)\, d\tau$$

oder auch die Maximalwerte

$$M_{L,string,4} = \max_\tau \sum_i P(i, G(i,\tau))$$

oder

$$M_{L,string,5} = \max_\tau \sum_i G(i,\tau)$$

oder auch die Minimalwerte

$$M_{L,string,6} = \min_{\tau} \sum_i P(i, G(i,\tau))$$

oder

$$M_{L,string,7} = \min_{\tau} \sum_i G(i,\tau)$$

oder

$$M_{L,string,8} = \int_{1.1.}^{31.12.} \min_i P(i, G(i,\tau))\mathrm{d}\tau$$

verwendet werden. Es kann vorteilhaft sein, die Minimalwerte zu berücksichtigen, wenn in der Verschaltung der Solarelemente keine Dioden eingesetzt werden sollen, da in diesem Fall in jedem Zeitschritt das leistungsschwächste Solarelement die Leistung des Strings begrenzt. Alternativ kann für jeden Zeitschritt die Strom-Spannungs-Kennlinie des Solarelements berechnet werden. Daraus kann dann die Leistung des Strings berechnet werden.

Zusätzlich wird eine obere und/oder eine untere Grenze $M_{L,string,max}$, $M_{L,string,min}$ für das Maß der Leistung des Strings definiert und die folgenden Verfahrensschritte durchgeführt:

Aus Tabelle 4 wird das Solarelement j mit dem kleinsten M ausgewählt und mit den bisherigen Solarelementen des Strings verbunden.

Tabelle 4 wird so aktualisiert, dass sie als Zeilen alle Verbindungen zwischen Solarelementen i, die bereits zu Strings verschaltet sind, und weiteren Solarelementen j hat, die gemäß der Randbedingung miteinander verschaltbar sind.

Berechnen des Maßes für die Leistung des Strings $M_{L,string}$.

Falls $\boldsymbol{M_{L,string,min}} < \boldsymbol{M_{L,string}} < \boldsymbol{M_{L,string,max}}$ wird das Verfahren abgebrochen. Falls $\boldsymbol{M_{L,string}} > \boldsymbol{M_{L,string,max}}$. Ersetzen der letzten Verbindung durch diejenige mit dem nächstkleinsten M im Wege der Tiefensuche (Depth First Search).

Als Startsolarelement für den nächsten String wird aus Tabelle 4 das Solarelement mit dem größten $G_s(j)$ ausgewählt.

Dieser Ausführungsform ist besonders vorteilhaft, wenn manche Solarelemente aufgrund von Verschattung deutlich weniger Leistung liefern als andere.

In einer alternativen Ausführungsform der Erfindung wird die Stringlänge durch die erwartete Spannung begrenzt. Dafür wird ein Maß für die Spannung des Strings benötigt $M_{U,string}$. Dies kann z. B. als Summe der Leerlaufspannungen $V_{oc}(i, T_{min})$ aller Elemente des Strings bei der erwarteten Minimaltemperatur $T_{min}$ berechnet werden mit $M_{U,string,1} = \Sigma_i V_{oc}(i, T_{min})$. Alternativ können als Stringspannungsmaß z. B.

$$M_{U,string,2} = \int_{-\infty}^{\infty} \sum_i U(i, G(i,\tau), T)\, d\tau$$ verwendet werden oder der Maximalwert

$$M_{U,string,3} = \max_{\tau} \sum_i U(i, G(i,\tau), T)$$ .

Zusätzlich wird eine obere und/oder eine untere Grenze $M_{U,string,max}$, $M_{U,string,min}$ für das Stringspannungsmaß definiert und die folgenden Verfahrensschritte durchgeführt:

Aus Tabelle 4 wird das Solarelement j mit dem kleinsten Unähnlichkeitsmaß M ausgewählt und mit den bisherigen Solarelementen des Strings verbunden.

Tabelle 4 wird so aktualisiert, dass sie als Zeilen alle Verbindungen zwischen Solarelementen i, die bereits zu Strings verschaltet sind, und weiteren Solarelementen j hat, die gemäß der Randbedingung miteinander verschaltet werden dürfen.

Berechnen des Maßes für die Leistung des Strings $M_{U,string}$.

Falls $\boldsymbol{M_{U,string,min}} < \boldsymbol{M_{U,string}} < \boldsymbol{M_{U,string,max}}$ wird das Verfahren abgebrochen. Falls $\boldsymbol{M_{U,string}} > \boldsymbol{M_{U,string,max}}$ wird die letzte Verbindung durch diejenige mit dem nächstkleinsten M im Wege der Tiefensuche ersetzt.

Als Startsolarelement für den nächsten String wird aus Tabelle 4 das Solarelement mit dem größten $G_s(j)$ ausgewählt.

Dieser Ausführungsform ist besonders vorteilhaft, wenn manche Solarelemente aufgrund von Verschattung deutlich weniger Leistung liefern als andere.

In einer bevorzugten Ausführungsform des erfindungsgemäßen Verfahrens wird in Verfahrensschritt C der Verschaltungsplan auf der Basis der Randbedingungsmenge ausgebildet, die zusätzlich eine Elementpaarrandbedingungsmenge aufweist. Die Elementpaarrandbedingungsmenge weist für alle Paare zweier unterschiedlicher Solarelemente i und j der Mehrzahl von Solarelementen zumindest eine der Randbedingungen RP aus der Liste

| RP1 | Maximaler Abstand zwischen den Solarelementen i und j |
| RP2 | Minimale Ähnlichkeit der Solarelemente i und j gemäß dem Ähnlichkeitsmaß AM(i, j) |
| RP3 | Solarelemente unmittelbar benachbart |
| RP4 | Solarelemente benachbart zu bereits verbundenen Strings |

auf.

Auch die verschiedenen Randbedingungen der Elementpaarrandbedingungsmenge und welche Randbedingungen erforderlich bzw. empfehlenswert sind, sind abhängig von den tatsächlichen Gegebenheiten, den zu verplanenden Solarelementen sowie den jeweiligen individuellen Zielen.

In einer bevorzugten Ausführungsform des erfindungsgemäßen Verfahrens erfolgt die Verschaltung der Solarelemente in Form einer Mehrzahl von Strings. Es sind mehrere Solarelemente in einem String in Reihe geschaltet. In Verfahrensschritt C werden dabei die Solarelemente mittels folgender Verfahrensschritte zur Verschaltung ausgewählt:

i Auswahl eines Startsolarelements i aus den noch nicht verschalteten Solarelementen, wobei das Startsolarelement die höchste Wertung gemäß eines der folgenden Startkriterien aufweist:

- die Paarung aus Startsolarelement i und Solarelement j weist das höchste Ähnlichkeitsmaß AM(i, j) im Vergleich zu allen anderen Paaren aus noch nicht verschalteten Solarelementen auf;
- Solarelement i weist die größte Einstrahlungssumme GS(i) der noch nicht verschalteten Solarelemente auf;
- Solarelement i ist gemäß der Elementpaarrandbedingungen nur mit einem weiteren Solarelement verschaltbar;
- Solarelement i ist das Solarelement von zwei Solarelementen eines dünnen Pfades von Solarelementen, die nur mit zwei weiteren Solarelementen verschaltbar sind, welches an eine berechnete Trennstelle angrenzt;

ii Auswahl des Solarelements j aus den noch nicht verschalteten Solarelementen, welches Solarelement j die größte Ähnlichkeit zu dem Startsolarelement i gemäß dem Ähnlichkeitsmaß AM(i, j) aufweist, wobei dieser Verfahrensschritt für jedes Ende des Strings durchgeführt wird und die Auswahl des Solarelements j aus den noch nicht verschalteten Solarelementen auf der Basis der Randbedingungen der Randbedingungsmenge erfolgt,

iii Festlegen der Reihenverschaltung der Solarelemente i und j, und Definieren des Solarelements i als erstes Ende und Solarelement j als zweites Ende des String der in Reihe geschalteter Solarelemente;

iv Wiederholen der Schritte ii und iii, wobei in Schritt ii das in dem zuvor ausgeführten Schritt ii bestimmte Solarelement j als Startsolarelement i verwendet wird und wobei die Wiederholung zumindest dann abgebrochen wird, wenn zumindest eine der Randbedingungen RS2, RS4, RS6, RS8 erfüllt ist und/oder aufgrund der Randbedingungen RS1, RS3, RS5, RS7, RP2 kein weiteres Solarelement hinzugefügt werden kann.

Die Randbedingungen für den Abbruch ergeben sich vorzugsweise daraus, dass vorzugsweise mindestens die Mindestspannung für einen Wechselrichter erreicht wird und/oder die minimale Anzahl von Solarelementen in einem String und/oder die minimale Stromstärke und/oder die minimale Leistung des Strings erreicht wird. Dies entspricht den Stringrandbedingungen RS2, RS4, RS6 und RS8. Es ist ebenfalls möglich, so lange Solarelemente hinzuzufügen, bis durch das Hinzufügen des nächsten Solarelements die maximale Anzahl von Solarelementen in einem String und/oder die maximale Spannung des Strings und/oder die maximale Stromstärke und/oder die maximale Leistung des Strings überschritten werden würde. Dies entspricht den Stringrandbedingungen RS1, RS3, RS5, RS7. Ebenso sind Kombinationen der Abbruchkriterien RS1-RS8 möglich, um eine möglichst vorteilhafte Verschaltung zu finden. Vorzugsweise werden die Abbruchkriterien und ihre Parameter variiert und der Ertrag der verschiedenen Verschaltungen wird über eine Simulation verglichen. Wenn mehrere Wechselrichter zur Auswahl stehen, kann so eine besonders vorteilhafte Lösung gefunden werden.n.

Vorzugsweise erfolgt in Verfahrensschritt ii die Auswahl des Solarelements j aus den noch nicht verschalteten Solarelementen, derart, dass das Solarelement i und das Solarelement j eine oder mehrerer der Elementpaarrandbedingungen der Randbedingungsmenge, bevorzugt alle Elementpaarrandbedingungen der Randbedingungsmenge erfüllen.

In einer bevorzugten Ausführungsform des erfindungsgemäßen Verfahrens wird für alle noch nicht verschalteten Solarelemente die Anzahl V(i) der möglichen Verbindungen mit einem anderen Solarelement unter Berücksichtigung der Randbedingungen der Randbedingungsmenge bestimmt. Von dieser Information ausgehend wird in Verfahrensschritt i zunächst in einem Verfahrensschritt i.a eine Menge VM der noch nicht verschalteten Solarelemente i bestimmt, deren Anzahl V(i) kleiner als eine vorgegebene Obergrenze VG ist. Wenn die Menge VM nicht leer ist, wird das Solarelement i aus der Menge VM ausgewählt. Bevorzugt ist die Obergrenze VG=2. Hierdurch ergibt sich der Vorteil, dass das Verfahren mit den am schwersten zu verschaltenden Solarelementen, nämlich Solarelemente mit V(i)=1, startet und das Risiko reduziert wird, dass diese Solarelemente als nicht verschaltbar übrigbleiben.

Vorzugsweise werden in Verfahrensschritt i.a folgende Verfahrensschritte wiederholt. Dabei wird der Startwert für VG = 2 gesetzt:

$VG_i$ Bestimmung der Menge VM der noch nicht verschalteten Solarelemente i, deren Anzahl V(i) kleiner als die Obergrenze VG ist,

$VG_{ii}$ Erhöhen der Obergrenze VG um 2; Wenn die Menge VM nicht leer ist, Bestimmung des Startsolarelements i aus der Menge VM, sonst Wiederholen des Verfahrensschrittes $VG_i$ ;

Die Verfahrensschritte werden wiederholt, bis die Menge VM nicht leer ist. Wenn die Menge VM nicht leer ist, wird das Startsolarelement i aus der Menge VM bestimmt.

Da durch jeden neuen String Solarelemente mit V(i)=1 entstehen können, wird der Verfahrensschritt i.a vorzugsweise für den Start jedes neuen Strings durchgeführt.

Die Verschaltungsplanung eines Strings ändert üblicherweise die Bedingungen für alle noch nicht final verschalteten Solarelemente, da beispielsweise die Anzahl V(i) der möglichen Verbindungen mit einem anderen Solarelement unter Berücksichtigung der Randbedingungen der Randbedingungsmenge reduziert wird. In einer bevorzugten Ausführungsform des erfindungsgemäßen Verfahrens wird nach Verschaltungsplanung eines Strings mittels Durchführens der Verfahrensschritte i bis iv, vorzugsweise einschließlich aller Unterverfahrensschritte, eine Prüfung der noch nicht verschalteten Solarelemente gemäß der Prüfkriterien einer Restbedingungsmenge durchgeführt, wobei die Restbedingungsmenge zumindest eines, bevorzugt alle Prüfkriterien aus der folgenden Liste aufweist:

- die noch nicht verschalteten Solarelemente bilden einen Hamiltonweg
- falls durch die Verschaltungsplanung des letzten Strings eine Restfläche der Belegfläche mit noch zu verschaltenden Solarelementen in zwei oder mehr Teilflächen geteilt wurde, Prüfen, ob jede Teilfläche eine oder mehrere Randbedingungen RS1-RS8 der Stringrandbedingungsmenge erfüllt oder ein Vielfaches davon. Mit diesen Kriterien wird geprüft, ob sich aus den Restflächen noch ganze Strings bilden lassen.
- Die Anzahl der Elemente mit ungeradem V(i) geteilt durch 2 ist kleiner oder gleich der möglichen Anzahl ganzer Strings in dieser Teilfläche. Dies ist erforderlich, damit jedes Element mit ungeraden V(i) Start oder Endpunkt eines Strings werden kann. Ist dieses Kriterium nicht erfüllt, bleibt zumindest ein Solarelement, welches nicht verschaltbar ist.

Bei zumindest einem nicht zutreffenden Prüfkriterium aus der Restbedingungsmenge wird die Verschaltungsplanung des Strings gelöscht. Dabei können bekannte Vorgehensweisen der Tiefensuche angewendet werden.

Bevorzugt erfolgt die Optimierung der Verschaltungsplanung wie folgt: Wird durch die Verschaltungsplanung ein String erzeugt, der mit den Prüfkriterien der Restbedingungsmenge kollidiert, wird dieser letzte String rückgängig gemacht und das Verfahren mit leicht veränderten Startwerten erneut gestartet. Dies kann zum Beispiel dahingehend erfolgen, dass als Startsolarelement, das noch nicht verbundene Startsolarelement ausgewählt wird, welches nur die zweitgrößte Einstrahlungssumme GS(i) hat. Dann wird der String erneut gebildet. Für den Fall, dass der String erneut mit den Prüfkriterien der Restbedingungsmenge kollidiert, wird zusätzlich zu dem letzten auch der vorletzte String gelöscht. Dann wird das Verfahren für den vorletzten String mit einem neuen Startsolarelement gestartet. Hierfür kann beispielsweise das Solarelement mit der nächstniedrigeren Einstrahlungssumme GS(i) ausgewählt werden.

In einer bevorzugten Ausführungsform des erfindungsgemäßen Verfahrens erfolgt in einem Verfahrensschritt i.b eine erste Prüfung, ob es ein Solarelement i gibt, für das V(i)=2 ist. Ist dies der Fall, werden die folgen Unterverfahrensschritte durchgeführt:

i.b1 Prüfen, ob dieses Element mit weiteren Solarelementen j verbunden werden kann, für die V(j)=2 ist.
i.b2 Definieren dieser Solarelemente j und i als "dünnen Pfad".
i.b3 Prüfen, ob beide Solarelementverbindungsrichtungen V(i)=2 über die Restfläche verbunden werden können.

Ergibt die Prüfung in Verfahrensschritt i.b3, dass beide Solarelementverbindungsrichtungen V(i)=2 über die Restfläche verbunden werden können, wird das Solarelement des dünnen Pfads mit der höchsten Einstrahlungssumme GS(i) als Startsolarelement des nächsten Strings ausgewählt.

Ergibt die Prüfung in Verfahrensschritt i.b3, dass beide Solarelementverbindungsrichtungen V(i)=2 nicht über die Restfläche verbunden werden können, wird der dünne Pfad derart geteilt, dass beide Restflächen eine oder mehrere Randbedingungen RS1-RS8 oder ein Vielfaches davon erfüllen. Mit diesem Kriterium wird geprüft, ob sich aus den Restflächen noch ganze Strings bilden lassen. Als Startsolarelement des nächsten Strings wird zuerst das eine an die berechnete Trennstelle angrenzende Solarelement i gewählt. Für die Verschaltungsplanung des nächsten Strings wird das zweite an die berechnete Trennstelle angrenzende Solarelement j gewählt. Die Verschaltung der Solarelemente i und j über die berechnete Trennstelle hinweg wird verboten.

In einer bevorzugten Ausführungsform des erfindungsgemäßen Verfahrens zum Verschalten einer Mehrzahl auf einer Belegungsfläche angeordneter Solarelemente, wird ein Verschaltungsplans gemäß einer der beschriebenen Ausführungsformen oder gemäß einer Kombination einer oder mehrerer der oben beschriebenen Ausführungsformen erstellt und elektrische Verschaltungen der Solarelemente gemäß dem Verschaltungsplan ausgebildet.

Die Zeitverschiebung des Maximums der Kreuzkorrelation funktioniert gut bei unverschatteten Flächen mit unterschiedlicher Ausrichtung und bei Elementen, deren Einstrahlungsprofile sich ähneln. Wenn die Einstrahlungsprofile sehr unterschiedlich sind, kann die Zeitverschiebung des Maximums der Kreuzkorrelation gleich null sein, obwohl der Schatten zu unterschiedlichen Zeitpunkten auf die beiden Module fällt.

Dem kann man entgegenwirken, indem in einer bevorzugten Ausführungsform der Erfindung zunächst geprüft wird, ob die Einstrahlungsprofile ähnlich sind oder nicht. Dazu wird über die betragsmäßige Differenz der Einstrahlungsprofile integriert. Dieses Integral ist gleich null, wenn die Einstrahlungsprofile identisch sind. Wenn das Integral über einem festzulegenden Schwellwert liegt, wird bevorzugt die folgende zusätzliche Berechnung durchgeführt:
Für jedes Solarelement wird die Einstrahlung ohne Verschattung berechnet. Für jedes Solarelement wird die Differenz zwischen dem unverschatteten und dem realen Einstrahlungsprofil bestimmt, im Folgenden als Schattenprofil bezeichnet. Anschließend wird die Kreuzkorrelation zwischen den Schattenprofilen von jeweils zwei Solarelementen bestimmt. Die Zeitverschiebung des Maximums dieser Kreuzkorrelation entspricht nun dem Zeitunterschied des Schattens auf beiden Solarelementen.

In einer bevorzugten Ausführungsform der Erfindung wird geprüft, ob sich alle Solarelemente zu Strings verschalten lassen. Dafür muss z. B. die Anzahl der Solarelemente $n_E = a*(v+1)$ sein mit $a \epsilon N$, also ein Vielfaches der Solarelemente pro String. Falls es Teilmengen der Solarelemente gibt, die sich nicht mit den restlichen verschalten lassen (z. B. weil sie zu weit auseinander liegen), wird das erfindungsgemäße Verfahren oder eine bevorzugte Ausführungsform des erfindungsgemäßen Verfahrens auf diese Teilmengen bevorzugt einzeln angewandt werden.

Basierend auf dem Ähnlichkeitsmaß ist eine Vielzahl an Variationen des erfindungsgemäßen Verfahrens denkbar. Jede Ausführungsform führt zu einer charakteristischen Kombination von Solarertrag, Kosten und Rechenzeit. Verschiedene parallele Ergebnisse können dazu führen, dass die Belegung der Gebäudehülle mit Solarelementen geändert wird, was die Ästhetik der solaren Gebäudehülle beeinflusst. Hierbei können insbesondere Kombination verschiedener Ausführungsformen vorteilhaft sein. Zum Beispiel kann eine Ausführungsform mit kurzer Rechenzeit, die schnell eine erste Näherung liefert, ergänzt werden um Ausführungsformen mit längerer Rechenzeit, die im Hintergrund laufen und Verschaltungsmöglichkeiten mit vorteilhaften Kombinationen von Solarertrag und Kosten vorschlagen.

In einer bevorzugten Ausführungsform der Erfindung wird das Verfahren wie folgt durchgeführt:
Voraussetzung ist vorliegend, dass sich alle Solarelemente zu Strings verschalten lassen. Dafür müssen die Stringrandbedingungen der Randbedingungsmenge erfüllt sein z. B. dass die Anzahl der Solarelemente ein ganzzahliges Vielfaches der Anzahl Solarelemente pro String ist. Falls es Teilmengen der Solarelemente gibt, die sich nicht mit den restlichen Solarelemente verschalten lassen (z. B. weil sie zu weit auseinander liegen), dann muss das Verfahren auf die Teilmengen einzeln angewandt werden.

Aller erforderlichen Informationen werden in Tabellen 1 bis 4 zusammengefasst.

Tabelle 1 hat als Spalten i, j, und das Ähnlichkeitsmaß AM(i, j). Tabelle 1 hat alle gemäß Randbedingung erlaubten Verschaltungen zweier Solarelemente i und j als Zeilen.

$$G_s(i) = \int_A^B G(i, \tau)\, d\tau$$

Tabelle 2 hat als Spalten i und die jährliche Einstrahlung                    als Spalten. Tabelle 2 hat alle Solarelemente i als Zeilen.

Tabelle 3 hat als Spalten i und die Anzahl V(i) der erlaubten Verbindungen des Solarelements i mit anderen Solarelementen. Tabelle 3 hat alle Solarelemente i als Zeilen.

Tabelle 4 hat als Spalten i, j, AM und $G_s(j)$. Tabelle 4 hat als Zeilen alle Verbindungen zwischen Solarelementen i, die bereits zu Strings verschaltet sind, weiteren Solarelementen j, die gemäß der Randbedingung miteinander verschaltet werden dürfen.

In dem Verfahrensschritt i wird in Tabelle 2 zunächst das Element mit dem größten Gs(i) gesucht und als Starsolarelement des ersten Strings definiert. Als nächstes wird die Tabelle 4 erstellt mit den Spalten i, j, Ähnlichkeitsmaß AM(i, j) und $G_s(j)$ und allen Solarelementen j, die mit Solarelement i verbunden werden dürfen, als Zeilen.

In dem Verfahrensschritt ii wird aus Tabelle 4 wird das Solarelement j mit dem größten Ähnlichkeitsmaß AM(i, j) ausgewählt und mit den bisherigen Solarelementen des Strings verbunden.

Tabelle 4 wird so aktualisiert, dass sie als Zeilen alle Verbindungen zwischen den Solarelementen i, die bereits zu Strings verschaltet sind, und weiteren Solarelementen j hat, die gemäß der Randbedingung miteinander verschaltet werden dürfen.

Für den nächsten String wird aus Tabelle 4 das Solarelement mit dem größten $G_s(j)$ als Startsolarelement ausgewählt. Die Verfahrensschritte ii und iii werden nun unter Berücksichtigung der Randbedingungen wiederholt, so dass an den beiden Enden des Strings nach und nach weitere Solarelemente hinzugefügt werden. Die Wiederholung endet, wenn aufgrund der Randbedingungen kein weiteres Element hinzugefügt werden kann. Dann ist der bisherige String fertig und die Verschaltung eines neuen Strings kann begonnen werden, indem Verfahrensschritt i erneut ausgeführt wird.

Dieser Verfahrensschritt wird gemäß Verfahrensschritt iv wiederholt, bis alle Solarelemente miteinander verplant sind. Falls es nicht gelingt, alle Solarelemente miteinander zu verbinden, dann wird das Verbinden des letzten Strings rückgängig gemacht und es wird das Solarelement mit dem zweitgrößten $G_s(j)$ als Startsolarelement verwendet. Gemäß der Tiefensuche (Depth First Search) werden auf diese Weise so viele Alternativen geprüft wie nötig.

In einer alternativen Ausführungsform der Erfindung werden anstelle der in der oben beschriebenen Ausführungsform als Startsolarelement nicht das Solarelement mit dem höchsten $G_s(i)$ gewählt, sondern es werden als die ersten beiden Solarelemente des ersten Strings diejenigen ausgewählt, die die höchste Ähnlichkeit miteinander aufweisen. Auch für den nächsten String werden aus Tabelle 4 die beiden Solarelemente als die ersten des nächsten Strings ausgewählt, die die höchste Ähnlichkeit miteinander aufweisen.

Üblicherweise werden Solarmodule in Form von Reihenschaltungen zu Strings verschaltet, weil dies für viele Wechselrichter benötigt wird und von der Ähnlichkeit der Stromerzeugung abhängt. Grundsätzlich können Strings allerdings auch parallelgeschaltet werden, z. B. um höhere Stromstärken zu erreichen oder um Maximum-Power-Point-(MPP-)Tracker im Wechselrichter zu sparen.

In einer bevorzugten Ausführungsform der Erfindung werden Strings parallelgeschaltet, deren Einstrahlung zeitversetzt ist, um Maximum-Power-Point - Tracker zu sparen. Das bedeutet, dass

$$K(i,j,t) = \int_{-\infty}^{\infty} G(i,\tau)G(j,\tau+t)d\tau \approx 0$$

, wobei $G(i, \tau)$ in diesem Fall die Einstrahlung auf einen ganzen String i bezeichnet. Ein String kann auch aus nur einem Solarelement bestehen.

In einer bevorzugten Ausführungsform der Erfindung werden Strings parallelgeschaltet, deren Einstrahlung ähnlich ist, wenn man die Stromstärke erhöhen möchte, um einen bestimmten Wechselrichter nutzen zu können. Dafür können die erfindungsgemäßen Ähnlichkeitsmaße eingesetzt werden, die in diesem Fall auf die gesamten Strings angewendet werden müssen.

Bevorzugt werden zunächst alle Solarelemente miteinander verschaltet und dann geeignete Wechselrichter ausgewählt.

Randbedingung für die Bildung eines Strings ist, dass ein Mindest-Ähnlichkeitsmaß $min_{AMseriell}$ erfüllt ist. Die daraus entstehenden Strings werden parallelgeschaltet, unter der Bedingung, dass ein Mindest-Ähnlichkeitsmaß $min_{AMparallel}$ erfüllt ist.

Diese beiden Schritte werden wiederholt, bis keine Verschaltungen mehr möglich sind, die die Bedingungen erfüllen. Der sich daraus ergebende Verschaltungsplan besteht aus mindestens einem String, wobei die Strings komplexe Kombinationen aus Seriell- und Parallelschaltungen sein können.

Für jeden String wird ein Leistungsmaß, vorzugsweise die Leistung unter Standard Test Conditions und eine Leistungsmaßdifferenz $\Delta_{LM}$ bestimmt.

Für das am häufigsten vertretene Leistungsmaß wird, vorzugsweise innerhalb der Leistungsmaßdifferenz $\Delta_{LM}$ um das Maximum eines Leistungshistogramms herum, ein Wechselrichtertyp ausgewählt, der das beste Preis-Leistungs-Verhältnis bietet. Jeder Wechselrichtertyp hat eine Leistungsmaßbreite, die er abdecken kann. Der ausgewählte Wechselrichtertyp wird vorzugsweise innerhalb seiner Leistungsmaßbreite so oft wie möglich eingesetzt.

Vorzugsweise wird dieser Schritt wiederholt, bis alle Strings einen Wechselrichter haben.

In einer alternativen Ausführungsform wird geprüft, welche der folgenden drei Optionen aufgrund zu definierender wirtschaftlicher oder leistungsbasierter Kriterien am besten ist:

Entweder es werden Leistungsoptimierer eingesetzt für all Strings, die in keinen Wechselrichter erhalten haben oder es werden nur die Strings in den Verschaltungsplan übernommen, die einen Wechselrichter erhalten haben oder der Verschaltungsplan wird verworfen und die ausgewählten Wechselrichter werden als Randbedingung definiert für eine neue Durchführung des Verfahrens.

In einer bevorzugten Ausführungsform der Erfindung wird das Verfahren wiederholt und damit mehrstufig ausgeführt. Wie bereits ausgeführt, werden Solarzellen sind zur Bildung eines Solarmoduls typischerweise in Form von Solarzellenstrings verschaltet, die wiederum untereinander verschaltet werden. Solarmodule werden für größere Anlagen zu Strings aus Solarmodulen verschaltet und diese Strings aus Solarmodulen werden weiter untereinander verschaltet. Das erfindungsgemäße Verfahren wird vorzugsweise für die Verschaltung von Solarzellen zu Solarzellenstrings und/oder die Verschaltung von Solarzellenstrings zu Solarmodulen und/oder die Verschaltung von Solarmodulen zu Strings aus Solarmodulen und/oder die Verschaltung von Strings aus Solarmodulen zu größeren Einheiten durchgeführt. Z.B. werden in einem ersten Schritt Strings aus Solarmodulen gemäß ihrem Stromstärkenähnlichkeitsmaß und Zeitähnlichkeitsmaß gebildet, bevorzugt bis zu einer maximalen Spannung von 1000V. Danach werden diese Strings vorzugsweise aus Solarmodulen gemäß ihrem Spannungsähnlichkeitsmaß und Zeitähnlichkeitsmaß weiterverschaltet.

In einer bevorzugten Ausführungsform wird das Verfahren als Computerprogramm mit Anweisungen realisiert, die, wenn das Programm von einem Computer ausgeführt wird, den Computer veranlassen, das erfindungsgemäße Verfahren oder eine bevorzugte Ausführungsform des erfindungsgemäßen Verfahrens auszuführen.

Es liegt ebenfalls im Rahmen der Erfindung produktspezifische Charakteristika zu berücksichtigen. Diese können teilweise über geeignete Randbedingungen abgedeckt werden. Auch die Kombination und/oder Zusammenwirkung mit Nutzervorgaben liegt im Rahmen der Erfindung. Nutzende können eingreifen, indem sie bestimmte Verschaltungen manuell vorgeben und nur der Rest mittels der oben beschriebenen Ausführungsformen oder einer Kombination geplant wird.

Das erfindungsgemäße Verfahren ist insbesondere geeignet für die Verschaltung von Solarzellen zu Solarmodulen, die keine Wechselrichter, Maximum-Power-Point-Tracker oder Stromwandler beinhalten. Die Erfindung lässt sich aber auch für Solarzellen oder Solarthermieelemente einsetzen. Die oben beschriebenen Unterverfahrensschritte und deren Parameter lassen sich verschiedentlich kombinieren. Jede Kombination führt zu einem Verfahren, das sich im Hinblick auf Solarertrag, Kosten und Rechenzeit unterscheidet. Über eine Ertragssimulation können Verschaltungspläne verglichen werden, um den am besten geeigneten zu finden.

Weitere bevorzugte Merkmale und Ausführungsformen des erfindungsgemäßen Verfahrens werden im Folgenden anhand von Ausführungsbeispielen und den Figuren erläutert.

Dabei zeigt:

Figur 1     eine beispielhafte Belegungsmöglichkeit einer Fassade;
Figur 2     einen Verschaltungsplan gemäß einem Ausführungsbeispiel der Erfindung;
Figur 3     mit den Teilabbildungen 3a und 3b zwei Verschaltungsalternativen für Solarelemente, die jeweils nur zwei Verbindungsmöglichkeiten haben;
Figur 4     ein Ablaufdiagramm für ein Ausführungsbeispiel der Erfindung.
Figur 5     mit den Teilabbildungen 5a und 5b ein Ausführungsbeispiel eines erfindungsgemäßen Verfahrens, bei dem die zu verschalteten Solarelemente in Gruppen eingeteilt werden.

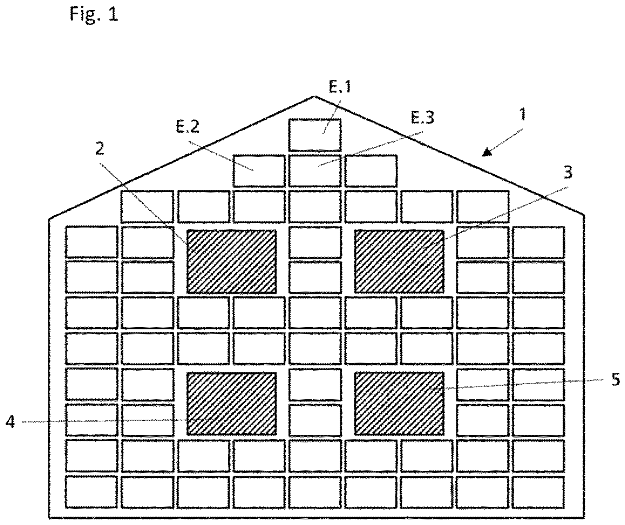

Figur 1 zeigt eine Belegungsfläche, vorliegend eine Gebäudehülle 1 in Form einer Fassade. Die Fassade weist vorliegend vier Fenster 2, 3, 4, 5 auf, die nicht belegt werden können und 67 Solarelemente, beispielhaft gekennzeichnet E.1, E.2, E.3, die auf der Fassade angeordnet sind. Über die Elementpaarrandbedingungen wird festgelegt, welche Verschaltungen welcher Solarelemente grundsätzlich erlaubt sind. Vorliegend ist festgelegt, dass zwei Solarelemente nur miteinander verschaltet werden dürfen, wenn sie sich direkt über-, unter- oder nebeneinander befinden. Weiter wird als Stringrandbedingung die Anzahl der Elemente pro String (v+1) definiert. Jeder String hat dabei v-Verbindungen zwischen den v+1-Elementen. Vorliegend ist v=1 für das Element E.1 und v=2 für das Element E.2. -?

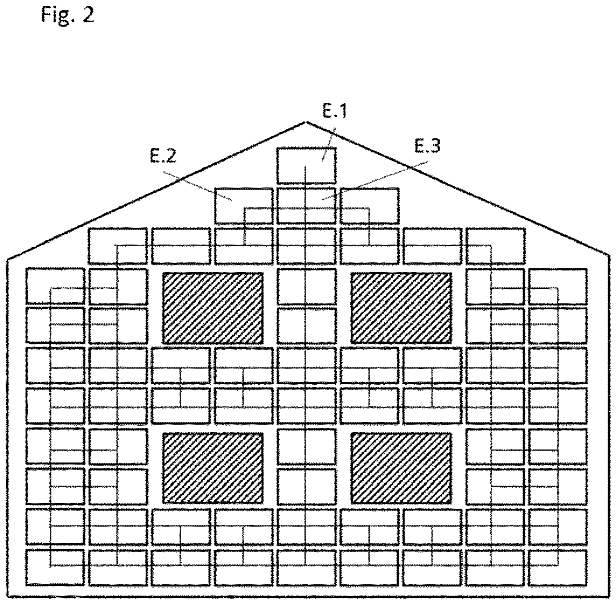

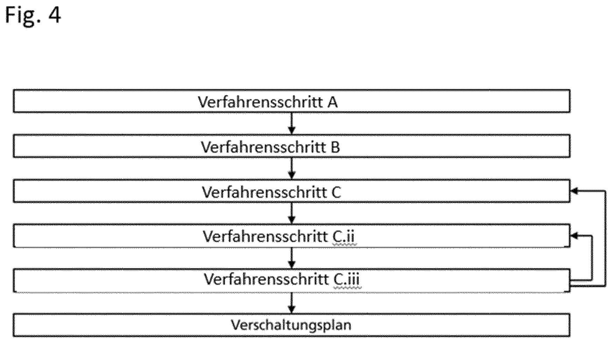

Figur 2 zeigt einen eine beispielhafte grafische Darstellung, welche Solarelemente mit welchen anderen Solarelementen gemäß den Elementpaarrandbedingungen verschaltet werden dürfen, für das folgende Ausführungsbeispiel, welches parallel in Figur 4 als Ablaufdiagramm dargestellt ist: Voraussetzung ist vorliegend, dass sich alle Solarelemente, beispielhaft gekennzeichnet E.1, E.2, E.3, zu Strings verschalten lassen. Dafür müssen die Stringrandbedingungen der Randbedingungsmenge erfüllt sein z. B. dass die Anzahl der Solarelemente ein ganzzahliges Vielfaches der Anzahl Solarelemente pro String ist. Falls es Teilmengen der Solarelemente gibt, die sich nicht mit den restlichen Solarelementen verschalten lassen (z. B. weil sie zu weit auseinander liegen), dann muss das Verfahren auf die Teilmengen einzeln angewandt werden. Vorliegend erfüllt die Menge der Solarelemente alle Randbedingungen.

Alle erforderlichen Informationen sind vorliegend in den Tabellen 1 bis 4 zusammengefasst.

Tabelle 1 hat als Spalten i, j, und das Ähnlichkeitsmaß AM(i, j). Tabelle 1 hat alle gemäß Randbedingung erlaubten Verschaltungen zweier Solarelemente i und j als Zeilen.

Tabelle 2 hat als Spalten i und die jährliche Einstrahlung $G_s(i) = \int_A^B G(i, \tau)\, d\tau$. Tabelle 2 hat alle Solarelemente i als Zeilen.

Tabelle 3 hat als Spalten i und die Anzahl V(i) der erlaubten Verbindungen des Solarelements i mit anderen Solarelementen. Tabelle 3 hat alle Solarelemente i als Zeilen.

Tabelle 4 hat als Spalten i, j, AM und $G_s(j)$. Tabelle 4 hat als Zeilen alle Verbindungen zwischen Solarelementen i, die bereits zu Strings verschaltet sind, weiteren Solarelementen j, die gemäß der Randbedingung miteinander verschaltet werden dürfen.

In dem Verfahrensschritt i wird in Tabelle 2 zunächst das Element mit dem größten $G_s(i)$ gesucht und als Startsolarelement des ersten Strings definiert. Als nächstes wird die Tabelle 4 erstellt mit den Spalten i, j, Ähnlichkeitsmaß AM(i, j) und $G_s$(j) und allen Solarelementen j, die mit Solarelement i verbunden werden dürfen, als Zeilen.

In dem Verfahrensschritt ii wird aus Tabelle 4 das Solarelement j mit dem größten Ähnlichkeitsmaß AM(i, j) ausgewählt und mit den bisherigen Solarelementen des Strings verbunden.

Tabelle 4 wird so aktualisiert, dass sie als Zeilen alle Verbindungen zwischen den Solarelementen i, die bereits zu Strings verschaltet sind, und weiteren Solarelement j hat, die gemäß der Randbedingung miteinander verschaltet werden dürfen.

Wähle aus Tabelle 4 das Element mit dem größten $G_s$(j) als Startsolarelement für den nächsten String. Die Verfahrensschritte ii und iii werden nun unter Berücksichtigung der Randbedingungen wiederholt, so dass an den beiden Enden des Strings nach und nach weitere Solarelemente hinzugefügt werden. Die Wiederholung endet, wenn aufgrund der Randbedingungen kein weiteres Element hinzugefügt werden kann. Dann ist der bisherige String fertig und die Verschaltung eines neuen Strings kann begonnen werden, in dem Verfahrensschritt i erneut ausgeführt wird.

Dieser Verfahrensschritt wird gemäß Verfahrensschritt iv wiederholt, bis alle Solarelemente miteinander verplant sind. Falls es nicht gelingt, alle Solarelemente miteinander zu verbinden, dann wird das Verbinden des letzten Strings rückgängig gemacht und es wird das Solarelement mit dem zweitgrößten $G_s$(j) als Startsolarelement verwendet. Gemäß der Tiefensuche (Depth First Search) werden auf diese Weise so viele Alternativen geprüft wie nötig.

Dabei kann es zu Spezialfällen kommen, die im Folgenden nicht abschließend beschrieben werden.

Wie in Figur 2 dargestellt, können manche Solarelemente, zum Beispiel E.3, mit vier anderen Solarelementen verschaltet werden. Das Solarelement E.1 kann jedoch nur mit einem weiteren Solarelemente E.3 verbunden werden. Diese Informationen werden wie beschrieben für jedes Solarelement in der Tabelle 3 hinterlegt, die für jedes Solarelement i die Anzahl der erlaubten Verbindungen V(i) des Solarelements mit anderen Solarelementen und mit allen Solarelementen als Teil anzeigt.

Nach der Planung der Verschaltung eines Strings wird geprüft, ob sich die restlichen Solarelemente noch verschalten lassen. Vorzugsweise wird geprüft, ob die restlichen Solarelemente einen Hamilton-Weg bilden. Für den Fall, dass die Restflächen aus den noch zu verschalteten Solarelementen aus mehreren Teilflächen bestehen, wird geprüft, ob jede Teilfläche aus einem Vielfachen der Solarelemente pro String (v+1) besteht. Zusätzlich kann für jede Teilfläche geprüft werden, ob die Anzahl der Solarelemente mit einer ungeraden Anzahl an Verbindungsmöglichkeiten $\frac{V(i)}{2} \leq$ der Stringanzahl in dieser Teilfläche ist. Dies ist erforderlich, da jedes Solarelement mit einem ungeraden Wert für V(i) Start- oder Endpunkt eines Strings werden muss. Schlägt eine der beschriebenen Prüfungen fehl, kann der letzte Schritt der Planung der Verschaltung rückgängig gemacht werden und mit entsprechenden Startkriterien neu durchgeführt werden.

Grundsätzlich kann es sinnvoll sein, alle Solarelemente, für die es nicht viele Verbindungsmöglichkeiten gibt, zuerst zu verbinden. In Figur 1 wäre dies das oberste Solarelement E.1 unter dem Dachfirst, da dieses Element nur mit einem weiteren Solarelement verbunden werden kann gemäß der Elementpaarrandbedingungen. Dieses Solarelement E.1 eignet sich somit als Startsolarelement des ersten Strings. Für den Fall, dass es weitere Solarelemente mit nur einer Verbindungsmöglichkeit geben sollte (V(i) = 1), könnten diese als erste Startsolarelemente der nächsten Strings dienen, vorzugsweise gewichtet in absteigender Reihenfolge ihrer jährlichen Einstrahlung G(i). Die Anzahl der Verbindungsmöglichkeiten eines Solarelements gemäß den Elementpaarrandbedingungen wird im Folgenden mit V(i) bezeichnet. Die Solarelemente mit V(i) = 3 dienen im Anschluss ebenfalls in absteigender Reihenfolge ihrer jährlichen Einstrahlung als jeweiliges Startsolarelement des nächsten Strings. Wenn es keine Solarelemente mit einer ungeraden Anzahl V(i) mehr gibt, ist dieses Kriterium für die Auswahl des Startsolarelements nicht mehr relevant.

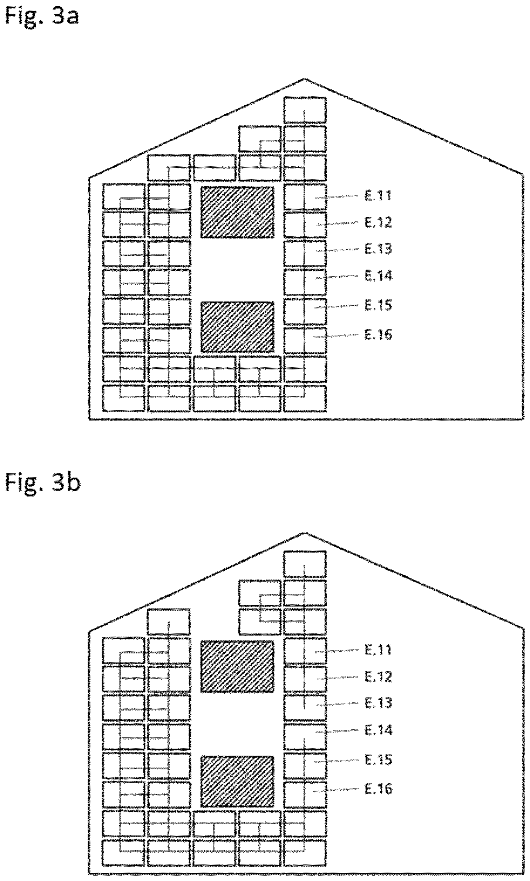

Figur 3 mit den Teilabbildungen 3a und 3b zeigt zwei Verschaltungsalternativen für Solarelemente, die jeweils nur zwei Verbindungsmöglichkeiten haben.

Im Laufe des Verfahrens können in der Restfläche dünne Pfade aus Solarelementen entstehen, das heißt, mehrere nebeneinanderliegende Solarelemente E.11, E.12, E.13, E.14, E.15, E.16 jeweils mit nur zwei Verbindungsmöglichkeiten, das heißt V(i) = 2. Diese Solarelemente/dünnen Pfade können eine Herausforderung darstellen, für die Verschaltung, dass keine Lücken entstehen.

Figuren 3a und 3b zeigen jeweils eine schematische Zeichnung eines dünnen Pfades mit sechs Solarelementen E.11, E.12, E.13, E.14, E.15, E.16 mit V(i) = 2. Wie in Figur 3 in Teilabbildung a dargestellt, sind beide Enden des Pfads über die Restflächen miteinander verbunden. In Teilabbildung b ist dargestellt, wie die Enden des Pfades über die Restflächen nicht miteinander verbunden werden können. Der Pfad wird entsprechend der Anzahl der Elemente getrennt. Die Trennstelle liegt zwischen den Solarelementen E.13 und E.14, die jeweils Startsolarelement eines neuen Strings sind.

Der Ablauf des Verfahrens ist dabei wie folgt: In einem ersten Schritt werden dünne Pfade mit mehr als n Solarelementen gesucht. Der Grenzwert n kann dabei beliebig festgelegt werden. In einem zweiten Schritt wird geprüft, ob beide Enden des dünnen Pfads E.11, E.16 über die Restfläche verbunden werden können. Für den Fall, dass beide Enden des dünnen Pfades über die Restfläche verbunden werden können, wird das Solarelement des dünnen Pfades mit dem höchsten Einstrahlungswert als Startsolarelement des nächsten Strings ausgewählt. Für den Fall, dass nicht beide Enden des dünnen Pfades über die Restfläche verbunden werden können, werden die Solarelemente zu beiden Seiten des Pfades gezählt. Dann wird der dünne Pfad so geteilt, dass beide Restflächen die Stringrandbedingungen bzw. ein Vielfaches dieser Stringrandbedingungen erfüllen, z. B. dass sie aus einem Vielfachen der (v + 1) Solarelemente eines Strings bestehen. Die beiden Solarelemente E.13, E.14 an der Trennstelle werden nacheinander als Starsolartelement des nächsten Strings ausgewählt.

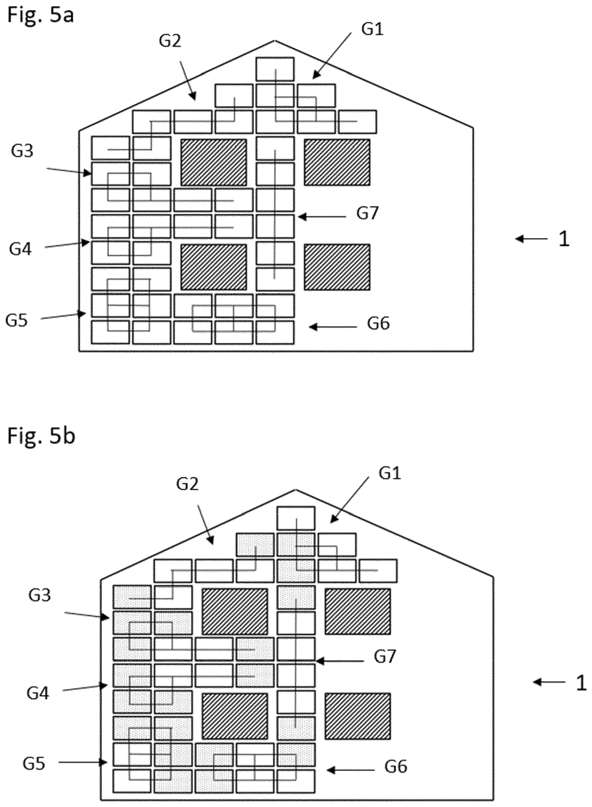

Figur 5 mit den Teilabbildungen 5a und 5b zeigt ein Ausführungsbeispiel eines erfindungsgemäßen Verfahrens, bei dem die zu verschalteten Solarelemente in Gruppen eingeteilt werden.

In einem ersten Verfahrensschritt werden die Solarelemente in vorläufige Gruppen G1, G2, G3, G4, G5, G6, G7 mit jeweils (v+1) Solarelementen aufgeteilt. Dabei wird z. B. in einer Ecke angefangen, dort sechs Solarelemente miteinander verschalten, danach daneben wieder sechs, etc. ohne Rücksicht auf ein Ähnlichkeitsmaß. Teilabbildung 5a zeigt eine Skizze einer solchen Aufteilung.

In einem weiteren Verfahrensschritt werden Tabelle 5 und Tabelle 6 erstellt:

Tabelle 5 hat als erste Spalte die Solarelemente i, die an eine andere Gruppe abgegeben werden können aufgrund der Tatsache, dass sie an benachbarte Gruppen angrenzen und man den Rest der Gruppe auch ohne dieses Element verschalten kann.

Tabelle 5 hat als zweite Spalte die Gruppe k, an die das Element i abgegeben werden könnte. Tabelle 5 hat als dritte Spalte das Verhältnis $\frac{M_{G,b}(i)}{M_{G,n}(i)}$ als Maß dafür, wie vorteilhafte das Abgeben dieses Elements wäre. Dabei ist der Wert

$$M_{G,b}(i) = \frac{\sum_{(i,j)} M(i,j)}{n_{(i,j)}}$$

ein Maß für die Unähnlichkeit des Solarelements i zu seiner bisherigen Gruppe und den Wert

$$M_{G,n}(i) = \frac{\sum_{(i,j)-1} M(i,j)}{n_{(i,j)-1}}$$

ein Maß für die Unähnlichkeit der Gruppe ohne das Solarlelement i. Tabelle 5 hat als Zeilen all Kombinationen von Solarelementen i und einer Gruppe, in die dieses Solarelement abgegeben werden könnte.

Teilabbildung 5b zeigt alle Solarelemente der Gruppen G1, G2, G3, G4, G5, G6, G7 als gepunktete Solarelemente, die in eine andere Gruppe abgegeben werden können.

Tabelle 6 hat als Spalten die Gruppen k und das Maß für die Unähnlichkeit in einer Gruppe k

$$M_G(k) = \frac{\sum_{(i,j)} M(i,j)}{n_{(i,j)}}$$

. Dabei ist sind $M(i, j)$ die Unähnlichkeitsmaße zwischen den Solarelementen der Gruppe k, die gemäß den Randbedingungen verschaltet werden dürfen, geteilt durch die Anzahl $n_{(i,j)}$ der verschaltbaren Solarelemente (i, j).

Auf der Basis der Tabelle 6 wird das Maß für die Unähnlichkeit aller Gruppen $M_{AG} = \frac{\sum_k M_G(k)}{n_k}$ berechnet.

In einem weiteren Verfahrensschritt wird in Tabelle 5 das Solarelement mit dem höchsten Verhältnis $\frac{M_{G,b}(i)}{M_{G,n}(i)}$ von allen abgebbaren Solarelementen bestimmt. Dieses Verhältnis ist ein Maß dafür, wie vorteilhaft es ist, dieses Solarelement abzugeben. Das Solarelement mit dem höchsten Verhältnis wird von der ersten an die nächste Gruppe abgegeben und es wird gespeichert, dass die nächste Gruppe nun ein Solarelement zu viel hat und die erste Gruppe ein Solarelement zu wenig aufweist.

In einem weiteren Verfahrensschritt wird in Tabelle 5 das Solarelement der nächsten Gruppe, das das höchste Verhältnis $\frac{M_{G,b}(i)}{M_{G,n}(i)}$ von allen abgebbaren Solarelementen in dieser Gruppe hat, gesucht. Dieses Solarelement wird an die übernächste Gruppe abgegeben und gespeichert, welche Gruppe nun ein Solarelement zu viel hat und welche eines zu wenig.

In einem weiteren Verfahrensschritt wird bei den veränderten Gruppen, die die richtige Anzahl von Solarelementen haben, geprüft, ob sie einen Hamiltonweg bilden. Falls nein, werden gemäß der Tiefensuche die letzten Wechsel rückgängig gemacht und die nächsthöheren Verhältnisse $\frac{M_{G,b}(i)}{M_{G,n}(i)}$ gewählt.

Dann wird dieser Schritt so lange wiederholt, bis entweder:

- Keine Gruppe mehr ein Solarelement zu viel hat. Es wird geprüft, ob die Wechsel insgesamt vorteilhaft waren, so dass

$M_A$ nach den Wechseln kleiner ist als davor. Falls nein, werden die Wechsel rückgängig gemacht und bei den vorhergehenden Verfahrensschritten dem Solarelement mit dem nächsthöheren Verhältnis $\frac{M_{EG}(i,b)}{M_{EG}(i,n)}$ gestartet. Falls die Wechsel insgesamt vorteilhaft waren, werden die Tabelle 5 und Tabelle 6 aktualisiert und das Verfahren wird auf der Suche nach weiteren vorteilhaften Tauschmöglichkeiten wiederholt.

- Es gab mehr als $n_{max\,Tauschversuche}$ erfolglose Versuche, Solarelemente so zu tauschen, dass die Wechsel insgesamt vorteilhaft sind, d. h. dass $M_A$ nach den Wechseln kleiner ist als davor. In diesem Fall wird das Verfahren abgebrochen.

Um die Rechenzeit zu verkürzen, kann man viele Beschränkungen einführen. Vorzugsweise werden für $M_{G,b}(i)$, $M_G(k)$, $M_A = \frac{\sum_k M_G(k)}{n_k}$ und $\frac{M_{G,b}(i)}{M_{G,n}(i)}$ Grenzwerte definiert, ab denen keine Tauschversuche mehr unternommen werden. Diese Grenzwerte sind abhängig von den tatsächlichen Bedingungen und verwendeten Komponenten.

**Patentansprüche**

1. Verfahren zum Erstellen eines Verschaltungsplans für die elektrische Verschaltung einer Mehrzahl auf einer Belegungsfläche angeordneter Solarelemente (E.1, E.2, E.3), mit den Verfahrensschritten,

A Bereitstellen der Belegungsfläche als Flächenmodell, insbesondere der Belegungsfläche einer Gebäudehülle (1) als Flächenmodell; Bereitstellen eines Belegungsplans mit der Position jedes der Mehrzahl von Solarelementen (E.1, E.2, E.3) auf der Belegungsfläche; Bereitstellen von Einstrahlungsdaten, wobei die Einstrahlungsdaten für mehrere Positionen $P_i$ auf der Belegungsfläche jeweils für zumindest drei Zeitpunkte t einen Einstrahlungswert G(i, t) der zu dem Zeitpunkt t an der Position $P_i$ einfallenden Strahlung, insbesondere der einfallenden Sonnenstrahlung, aufweist;

B Berechnen eines Ähnlichkeitsmaßes AM(i, j), für alle Paare zweier unterschiedlicher Solarelemente i und j einer Untergruppe der Mehrzahl von Solarelementen (E.1, E.2, E.3), wobei das Ähnlichkeitsmaß AM(i, j) abhängig von einem Zeitähnlichkeitsmaß Z(i, j) und/oder einem Stromstärkenähnlichkeitsmaß S(i, j) und/oder einem Spannungsähnlichkeitsmaß SM(i, j) für alle Paare zweier unterschiedlicher Solarelemente i und j einer Untergruppe der Mehrzahl von Solarelementen (E.1, E.2, E.3) berechnet wird, wobei das Zeitähnlichkeitsmaß Z(i, j) für alle Paare zweier unterschiedlicher Solarelemente i und j einer Untergruppe der Mehrzahl von Solarelementen (E.1, E.2, E.3) als Maß einer zeitlichen Verschiebung zwischen den Einstrahlungswerten G(i, t) des Solarelements i und den Einstrahlungswerten G(j, t) des Solarelements j ausgebildet ist und wobei das Stromstärkenähnlichkeitsmaß S(i, j) als Maß einer zeitbasierten Ähnlichkeit der elektrischen Stromstärken der Solarelemente i und j einer Untergruppe der Mehrzahl von Solarelementen (E.1, E.2, E.3) berechnet wird und wobei das Spannungsähnlichkeitsmaß SM(i, j) als Maß einer zeitbasierten Ähnlichkeit der elektrischen Spannungen der Solarelemente i und j einer Untergruppe der Mehrzahl von Solarelementen (E.1, E.2, E.3) berechnet wird.

C Erstellen eines elektrischen Verschaltungsplans in Abhängigkeit des Ähnlichkeitsmaßes AM(i, j).

2. Verfahren nach Anspruch 1,
**dadurch gekennzeichnet,**
**dass** das Zeitähnlichkeitsmaß Z(i, j) der Solarelemente i und j mittels einer Faltung, bevorzugt mittels einer Kreuzkorrelation der Einstrahlungswerte G(i, t) und G(j, t) bestimmt wird, insbesondere mittels der Kreuzkorrelation K(i, j, t)

$$K(i,j,t) = \int_A^B G(i,\tau)G(j,\tau+t)d\tau$$

mittels mit den zeitlichen Korrelationsgrenzen $A$ und B, wobei bevorzugt A und B sich um mindestens 4h, insbesondere bevorzugt um mindestens 6h unterscheiden.

3. Verfahren nach Anspruch 2,
**dadurch gekennzeichnet,**

**dass** das Zeitähnlichkeitsmaß Z(i, j) basierend auf dem Maximum der Faltung, insbesondere der Kreuzkorrelation der Einstrahlungswerte G(i, t) und G(j, t) bestimmt wird, insbesondere, dass das Maximum der Kreuzkorrelation *max[K(i, j, t)]* bestimmt wird und der Kehrwert des Betrags der Abszisse $\frac{1}{|t|}\left|\frac{1}{\max\limits_{t\in[-12h,12h]}[K(i,j,t)]}\right|$
dieses Maximums als Zeitähnlichkeitsmaß Z(i, j) verwendet wird, wenn dieses Maximum ungleich null ist und es genau ein Maximum gibt, wenn dieses Maximum null ist, wird das Zeitähnlichkeitsmaß Z(i, j) auf einen Wert gesetzt, der signalisiert, dass die Verschaltung der Solarelemente i und j maximal vorteilhaft,
bevorzugt, wenn es mehrere Maxima ungleich null gibt, wird der größte Kehrwert des Betrags der Abszissen als Zeitähnlichkeitsmaß Z(i, j) verwendet:

$$Z(i,j) = max(x), \forall x \in \left\{ \frac{1}{|t|}\left|\frac{1}{\max\limits_{t\in[-12h,12h]}[K(i,j,t)]}\right| \right\}$$

4. Verfahren nach einem der vorangegangenen Ansprüche,
   **dadurch gekennzeichnet,**
   **dass** in Verfahrensschritt B das Stromstärkenähnlichkeitsmaß S(i, j) abhängig vom Betrag der Differenz der Stromstärken |*I*(*G*(i, $\tau$)) - *I*(*G*(j, $\tau$))| der Solarelemente i und j für eine Mehrzahl von Zeitpunkten t bestimmt wird,

   $$S(i,j) = \frac{1}{\int_A^B |I(G(i,\tau)) - I(G(j,\tau))| d\tau}$$

   insbesondere, dass                                                         mit den zeitlichen Korrelationsgrenzen A und B, wobei bevorzugt A und B sich um mindestens 4h, bevorzugt um mindestens 6h unterscheiden.

5. Verfahren nach einem der vorangegangenen Ansprüche,

   **dadurch gekennzeichnet,dass** in Verfahrensschritt B das Spannungsähnlichkeitsmaß SM(i, j) abhängig vom Betrag der Differenz der Spannungen |*U*(*G*(i, $\tau$)) - *U*(*G*(j, $\tau$))| der Solarelemente i und j für eine Mehrzahl von Zeitpunkten t bestimmt wird, insbesondere, dass

   $$SM(i,j) = \frac{1}{\int_A^B |U(G(i,\tau)) - U(G(j,\tau))| d\tau}$$

   mit den zeitlichen Korrelationsgrenzen A und B,
   wobei bevorzugt A und B sich um mindestens 4h, bevorzugt um mindestens 6h unterscheiden.

6. Verfahren nach einem der vorangegangenen Ansprüche,
   **dadurch gekennzeichnet,**

   **dass** für jedes Solarelement i der Mehrzahl von Solarelementen (E.1, E.2, E.3) eine Einstrahlungssumme Gs(i) bestimmt wird, welche ein Maß für mittels dieser Solarelemente (E.1, E.2, E.3) erzeugte elektrische Energie darstellt, insbesondere, dass

   $$G_s(i) = \int_A^B G(i,\tau)\, d\tau$$

   mit den zeitlichen Korrelationsgrenzen *A* und *B*, wobei A < *B* und die zeitlichen Korrelationsgrenzen bevorzugt den Zeitraum mehrerer Monate, insbesondere bevorzugt den Zeitraum eines Jahres umschließen.

7. Verfahren nach einem der vorangegangenen Ansprüche,
   **dadurch gekennzeichnet,**
   **dass** in Verfahrensschritt C der Verschaltungsplan mit einer Mehrzahl von Strings von Solarelementen ausgebildet wird, wobei jeder String eine Mehrzahl in Reihe geschalteter Solarelemente aufweist und der Verschaltungsplan in Abhängigkeit einer Randbedingungsmenge ausgebildet wird, wobei die Randbedingungsmenge eine Stringrandbedingungsmenge aufweist, wobei die Stringrandbedingungsmenge zumindest eine der Randbedingungen RS1 bis RS8

- RS1 Maximale Anzahl der Solarelemente in einem String;
- RS2 Minimale Anzahl der Solarelemente in einem String;
- RS3 Maximale Spannung des Strings;
- RS4 Minimale Spannung des Strings;
- RS5 Maximale Stromstärke des Strings;
- RS6 Minimale Stromstärke des Strings;
- RS7 Maximale Leistung des Strings;
- RS8 Minimale Leistung des Strings;

aufweist.

8. Verfahren nach Anspruch 7,
**dadurch gekennzeichnet,**
**dass** die Randbedingungsmenge zusätzlich eine Elementpaarrandbedingungsmenge aufweist, wobei die Elementpaarrandbedingungsmenge für alle Paare zweier unterschiedlicher Solarelemente i und j der Mehrzahl von Solarelementen (E.1, E.2, E.3) zumindest eine der Randbedingungen RP aus der Liste

- RP1 Maximaler Abstand zwischen den Solarelementen i und j
- RP2 Minimale Ähnlichkeit der Solarelemente i und j gemäß dem Ähnlichkeitsmaß AM(i, j)
- RP3 Elemente unmittelbar benachbart
- RP4 Elemente benachbart zu bereits verbundenen Strings

aufweist.

9. Verfahren nach einem der Ansprüche 7 oder 8,
**dadurch gekennzeichnet,**

**dass** die Verschaltung der Solarelemente (E.1, E.2, E.3) eine Mehrzahl von Strings mit in Reihe geschalteten Solarelementen aufweist,
und **dass** in Verfahrensschritt C Solarelemente mittels folgender Verfahrensschritte zur Verschaltung ausgewählt werden

i. Auswahl eines Startsolarelements i aus den noch nicht verschalteten Solarelementen (E.1, E.2, E.3), wobei das Startsolarelement die höchste Wertung gemäß eines der folgenden Startkriterien aufweist:

- die Paarung aus Startsolarelement i und Solarelement j weist das höchste Ähnlichkeitsmaß AM(i, j) im Vergleich zu allen anderen Paaren aus noch nicht verschalteten Solarelementen auf;
- Solarelement i weist die größte Einstrahlungssumme Gs(i) der noch nicht verschalteten Solarelemente auf;
- Solarelement i ist gemäß der Elementpaarrandbedingungen nur mit einem weiteren Solarelement verschaltbar;
- Solarelement i ist das Solarelement von zwei Solarelementen eines dünnen Pfades von Solarelementen (E.11, E.12, E.13, E.14, E.15, E.16), die nur mit zwei weiteren Solarelementen verschaltbar sind, und an eine berechnete Trennstelle angrenzt, mit der höchsten Einstrahlungssumme Gs(i);

ii. Auswahl des Solarelements j aus den noch nicht verschalteten Solarelementen, welches Solarelement j die größte Ähnlichkeit zu dem Startsolarelement i gemäß dem Ähnlichkeitsmaß AM(i, j) aufweist, wobei dieser Verfahrensschritt für jedes Ende des Strings durchgeführt wird und die Auswahl des Solarelements j aus den noch nicht verschalteten Solarelementen auf der Basis der Randbedingungen der Randbedingungsmenge erfolgt,
iii. Festlegen der Reihenverschaltung der Solarelemente i und j, wobei Solarelement i als erstes Ende und Solarelement j als zweites Ende des Strings der in Reihe geschalteter Solarelemente definiert wird;
iv. Wiederholen der Schritte ii und iii, wobei in Schritt ii das in dem zuvor ausgeführten Schritt ii bestimmte Solarelement j als Startsolarelement i verwendet wird und
wobei die Wiederholung zumindest dann abgebrochen wird, wenn zumindest eine der Randbedingungen RS2, RS4, RS6, RS8 erfüllt ist und/oder aufgrund der Randbedingungen RS1, RS3, RS5, RS7, RP2 kein weiteres Solarelement hinzugefügt werden kann.

**10.** Verfahren nach Anspruch 9,
**dadurch gekennzeichnet,**
**dass** in Verfahrensschritt ii. die Auswahl des Solarelements aus den noch nicht verschalteten Solarelementen erfolgt, welche eine oder mehrere der Elementpaarrandbedingungen der Randbedingungsmenge, bevorzugt alle Elementpaarrandbedingungen der Randbedingungsmenge erfüllen.

**11.** Verfahren nach einem der vorangegangenen Ansprüche 9 oder 10,
**dadurch gekennzeichnet,**

**dass** für alle noch nicht verschalteten Solarelemente die Anzahl V(i) der möglichen Verbindungen mit einem anderen Solarelement unter Berücksichtigung der Randbedingungen der Randbedingungsmenge bestimmt wird,
**dass** in Verfahrensschritt i zunächst in einem Verfahrensschritt i.a eine Menge VM der noch nicht verschalteten Solarelemente i, deren Anzahl V(i) kleiner als eine vorgegebene Obergrenze VG ist, bestimmt wird und, wenn die Menge VM nicht leer ist, das Startsolarelement i aus der Menge VM bestimmt wird.

**12.** Verfahren nach Anspruch 11,
**dadurch gekennzeichnet,**

**dass** in Verfahrensschritt i.a mit einem Startwert VG = 2 die Verfahrensschritte

VGi Bestimmung der Menge VM der noch nicht verschalteten Solarelemente i, deren Anzahl V(i) kleiner als die Obergrenze VG ist,
VGii
Wenn die Menge VM nicht leer ist, Bestimmung des Solarelements j aus der Menge VM, wenn die Menge VM leer ist, Erhöhen der Obergrenze VG um 2,

wiederholt werden, bis die Menge VM nicht leer ist und
wenn die Menge VM nicht leer ist, das Startsolarelement i aus der Menge VM bestimmt wird.

**13.** Verfahren nach einem der vorangegangenen Ansprüche 9 bis 12,
**dadurch gekennzeichnet,**

**dass** nach Verschaltungsplanung eines Strings mittels Durchführens der Verfahrensschritte i. bis iv. eine Prüfung der noch nicht verschalteten Solarelemente gemäß der Prüfkriterien einer Restbedingungsmenge erfolgt, wobei die Restbedingungsmenge zumindest eines, bevorzugt alle Prüfkriterien aus der Liste

- die noch nicht verschalteten Solarelemente bilden einen Hamiltonweg
- falls durch die Verschaltungsplanung des letzten Strings eine Restfläche der Belegfläche mit noch zu verschaltenden Solarelementen in zwei oder mehr Teilflächen geteilt wurde, Prüfen, ob jede Teilfläche eine oder mehrere Randbedingungen RS1-RS8 der Stringrandbedingungsmenge erfüllt oder ein Vielfaches davon;
- die Anzahl der Elemente mit ungeradem V(i) geteilt durch 2 ist kleiner oder gleich der möglichen Anzahl ganzer Strings in dieser Teilfläche;

aufweist, und dass bei zumindest einem nicht zutreffenden Prüfkriterium aus der Restbedingungsmenge die Verschaltungsplanung des Strings gelöscht wird.

**14.** Verfahren nach einem der vorangegangenen Ansprüche 9 bis 12,
**dadurch gekennzeichnet,**
**dass** in einem Verfahrensschritt i.b eine erste Prüfung erfolgt, ob es ein Solarelement i gibt, für das V(i)=2 ist und wenn diese Prüfung ein positives Ergebnis liefert, folgende Unterverfahrensschritte durchgeführt werden:

i.b1 Prüfen, ob dieses Solarelement i mit weiteren Solarelementen j verbunden werden kann, für die V(j)=2 ist;
i.b2 Definieren dieser Solarelemente j und i als dünnen Pfad (E.11, E.12, E.13, E.14, E.15, E.16);

i.b3 Prüfen, ob beide Solarelementverbindungsrichtungen V(i)=2 des dünnen Pfades über die Restfläche verbunden werden können;

ib.4 Ergibt die Prüfung in Verfahrensschritt i.b3, dass beide Solarelementverbindungsrichtungen V(i)=2 nicht über die Restfläche verbunden werden können, teilen des dünnen Pfades (E.11, E.12, E.13, E.14, E.15, E.16) derart, dass beide Restflächen eine oder mehrere Randbedingungen RS1-RS8 oder ein Vielfaches davon erfüllen sowie wählen des an die berechnete Trennstelle angrenzenden Solarelements i als Startsolarelement (E13) des nächsten Strings;

ib.5 Wählen des zweiten an die berechnete Trennstelle angrenzenden Solarelements j als Startsolarelement (E14) für die Verschaltungsplanung des nächsten Strings.

**15.** Verfahren zum Verschalten einer Mehrzahl auf einer Belegungsfläche angeordneter Solarelemente (E.1, E.2, E.3), mit den Verfahrensschritten Erstellen eines Verschaltungsplans gemäß einem der vorangegangenen Ansprüche und Ausbilden elektrischer Verschaltungen der Solarelemente gemäß dem Verschaltungsplan.

Fig. 1

Fig. 2

Fig. 3a

E.11
E.12
E.13
E.14
E.15
E.16

Fig. 3b

E.11
E.12
E.13
E.14
E.15
E.16

Fig. 4

| Verfahrensschritt A |
| Verfahrensschritt B |
| Verfahrensschritt C |
| Verfahrensschritt C.ii |
| Verfahrensschritt C.iii |
| Verschaltungsplan |

Fig. 5a

Fig. 5b

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2021/145141 A1 (SUMITOMO ELECTRIC INDUSTRIES [JP]) 22. Juli 2021 (2021-07-22) * Ansprüche 1-11; Abbildungen 1-6 * ----- | 1-15 | INV. H02S50/00 |
| A | WO 2021/235060 A1 (SHARP KK [JP]) 25. November 2021 (2021-11-25) * Ansprüche 1-7; Abbildungen 1-10 * ----- | 1-15 | |

**RECHERCHIERTE SACHGEBIETE (IPC)**

H02S

Der vorliegende Recherchenbericht wurde für alle Patentansprüche erstellt

| Recherchenort | Abschlußdatum der Recherche | Prüfer |
|---|---|---|
| Den Haag | 30. Januar 2025 | Boero, Mauro |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 0829

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2025

| Im Recherchenbericht angeführtes Patentdokument | Datum der Veröffentlichung | Mitglied(er) der Patentfamilie | Datum der Veröffentlichung |
|---|---|---|---|
| WO 2021145141 A1 | 22-07-2021 | KEINE | |
| WO 2021235060 A1 | 25-11-2021 | JP 7498272 B2 | 11-06-2024 |
| | | JP WO2021235060 A1 | 25-11-2021 |
| | | WO 2021235060 A1 | 25-11-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 24180782